(19) Europäisches Patentamt
European Patent Office
Office européen des brevets

(11) Veröffentlichungsnummer: **0 284 567 B1**

(12) **EUROPÄISCHE PATENTSCHRIFT**

(45) Veröffentlichungstag der Patentschrift: **01.03.95**

(51) Int. Cl.[6]: **C09B 44/10**, D06P 1/41, D21H 21/28, C09D 11/00

(21) Anmeldenummer: **88810182.1**

(22) Anmeldetag: **21.03.88**

(54) **Kationische Azofarbstoffe.**

(30) Priorität: **27.03.87 CH 1170/87**

(43) Veröffentlichungstag der Anmeldung:
**28.09.88 Patentblatt 88/39**

(45) Bekanntmachung des Hinweises auf die Patenterteilung:
**01.03.95 Patentblatt 95/09**

(84) Benannte Vertragsstaaten:
**BE CH DE FR GB IT LI**

(56) Entgegenhaltungen:
**EP-A- 0 183 151**
**FR-A- 2 378 003**

**DYES AND PIGMENTS, Band 6, Nr. 1, Januar 1985, Seiten 1-12, Elsevier AppliedScience Publishers Ltd, GB; E. BARNI et al.: "Disperse and cationic dyes from2-(o,m,p-aminophenyl)oxazolo[4,5-b]pyridine"**

(73) Patentinhaber: **CIBA-GEIGY AG**
**Klybeckstrasse 141**
**CH-4002 Basel (CH)**

(72) Erfinder: **Adam, Jean-Marie, Dr.**
**Rue de Village Neuf 60 D**
**F-68300 Rosenau (FR)**

**EP 0 284 567 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue kationische Azofarbstoffe, Verfahren zu deren Herstellung sowie deren Verwendung als Farbstoffe zum Färben oder Bedrucken von Textilmaterialien, Leder und vor allem Papier.

Gegenstand der Erfindung sind Azofarbstoffe der Formel

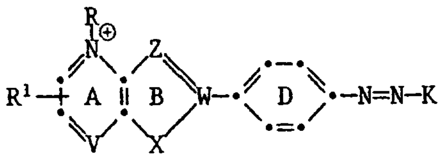 $An^{\ominus}$ (1)

oder deren tautomere Formen, worin bedeuten:

Z N, S oder CH,
X O, S, $NR^2$ oder N,
V N oder CH,
W N oder C,
K eine Kupplungskomponente aus der Reihe der Acylacetarylamide, Phenole, Pyridone, Chinoline, Pyrazole, Indole, Diphenylamine, Aminopyridine, Pyrimidine, Pyrimidone, Naphthole$_1$ Naphthylamine, Aminothiazole, Thiophene oder Hydroxypyridine,
R unsubstituiertes oder substituiertes Alkyl oder Alkenyl,
$R^1$ Wasserstoff, $C_1$-$C_6$-Alkyl, $C_1$-$C_4$-Alkoxy, Halogen, Nitro, -CN, $-NHR^2$, -NH-Acyl, Phenoxy, $COOR^2$, $-CONHR^2$ oder gegebenenfalls substituiertes Phenyl, wobei $R^2$ Wasserstoff, gegebenenfalls substituiertes $C_1$-$C_6$-Alkyl oder gegebenenfalls substituiertes Phenyl bedeutet,
D einen gegebenenfalls weitersubstituierten 1,4-Phenylenrest und
$An^{\ominus}$ ein Anion, wobei der Ring A noch einen ankondensierten, gegebenenfalls substituierten Benzolring tragen kann.

In Dyes and Pigments, Band 6, Nr. 1, Seiten 1-12, sind bereits kationische Farbstoffe mit 2-(Aminophenyl)oxazolo[4,5-b]pyridin als Diazo- und Dialkylanilinen als Kupplungskomponenten sowie ihre Verwendung zum Färben von Polyacrylnitrilmaterial beschrieben.

Die EP-A-0 183 151 beschreibt nichtkationische Azofarbstoffe mit 2-(4'-Aminophenyl)-benztbiazolsulfonsäuren als Diazokomponenten zum Färben von Papier.

Besonders bevorzugte Kupplungskomponenten für die Farbstoffe der vorliegenden Erfindung sind Pyrimidine, Acetessigarylamide, Pyrazole und Pyridine.

Bei den Pyrimidinen handelt es sich vor allem um Verbindungen der Formel

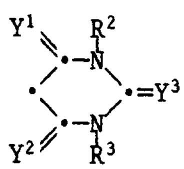 (2)

worin

$Y^1$ und $Y^2$ unabhängig voneinander =O, =NH oder =N-$C_1$-$C_6$-Alkyl,
$Y^3$ =O, =S, =$NR^2$ oder =N-CN und
$R^2$ und $R^3$ unabhängig voneinander Wasserstoff, gegebenenfalls substituiertes $C_1$-$C_6$-Alkyl oder gegebenenfalls substituiertes Phenyl bedeuten.

Stellen $R^2$ und/oder $R^3$ eine gegebenenfalls substituierte $C_1$-$C_6$-Alkylgruppe dar, so ist darunter wie generell in dieser Anmeldung z.B. ein Methyl-, Ethyl-, n- oder iso-Propyl-, n-, sec.-, iso- oder tert.-Butyl-, ein geradkettiger oder verzweigter Pentyl- oder Hexyl-oder ein Cyclohexylrest zu verstehen, der einfach oder mehrfach z.B. durch -OH, $C_1$-$C_4$-Alkoxy oder $C_1$-$C_4$-Hydroxyalkoxy substituiert sein kann.

Beispiele für geeignete substituierte $C_1$-$C_6$-Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl und 2-Hydroxyethoxypentyl.

Bedeuten $R^2$ und/oder $R^3$ gegebenenfalls substituiertes Phenyl, so kann es sich um unsubstituiertes oder einfach oder mehrfach mit gleichen oder verschiedenen Resten substituiertes Phenyl handeln. Als

derartige Reste kommen z.B. in Frage: $C_1$-$C_4$-Alkyl, worunter in dieser Anmeldung generell Methyl, Ethyl, n- oder iso-Propyl oder n-, sec.- oder tert.-Butyl zu verstehen ist, $C_1$-$C_4$-Alkoxy, welches in dieser Anmeldung generell Methoxy, Ethoxy, n- oder iso-Propoxy oder n-, sec.- oder tert.-Butoxy umfasst, Halogen wie Fluor, Chlor oder Brom oder Nitro.

Vorzugsweise handelt es sich bei $R^2$ und/oder $R^3$ als Phenyl um unsubstituiertes oder mit 1 bis 3 $C_1$-$C_4$-Alkyl-, Chlor oder Methoxygruppen substituiertes Phenyl, wobei insbesondere die Bedeutung unsubstituiertes Phenyl bevorzugt ist.

$R^2$ und/oder $R^3$ stehen bevorzugt für Wasserstoff oder $C_1$-$C_4$-Alkyl und besonders bevorzugt für Wasserstoff.

$Y^1$ und/oder $Y^2$ stehen vorzugsweise für die funktionelle Gruppe =O oder =NH, wobei es ausserdem bevorzugt ist, dass $Y^1$ und $Y^2$ gleich sind. $Y^1$ und $Y^2$ sind besonders bevorzugt gleich und bedeuten jeweils =O.

Ist $Y^3$ =$NR^2$, so gelten für $R^2$ die Zuvor genannten Bedeutungen und Bevorzugungen.

$Y^3$ stellt bevorzugt die Gruppe =O, =NH oder =N-CN und insbesondere bevorzugt die Gruppe =O dar.

In einer besonders bevorzugten Ausführungsform der erfindungsgemässen Azofarbstoffe stehen $Y^1$, $Y^2$ und $Y^3$ jeweils für =O.

Ist die Kupplungskomponente K ein Acetessigarylamid, so handelt es sich insbesondere um eine Verbindung der Formel

$CH_3$-CO-$CH_2$-CO-NH-Ar (3)

worin Ar ein Phenyl-, Naphthyl- oder Benzthiazolyl-2-rest ist, welcher durch $C_1$-$C_4$-Alkyl, $C_1$-$C_4$-Alkoxy, Chlor, Brom, Nitro oder Acetylamino substituiert sein kann. Besoders bevorzugt sind Kupplungskomponenten der Formel (3), worin Ar ein Phenylrest ist, der ein- oder zweimal substituiert ist durch Methyl, Methoxy oder Acetylamino.

Stellt die Kupplungskomponente K eine Pyrazol dar, so entspricht dieses vorzugsweise der Formel

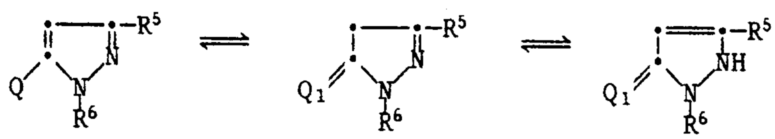

(4),

worin Q OH oder $NH_2$, $Q_1$ O oder NH, $R^6$ H, $C_1$-$C_4$-Alkyl, Alkenyl, Cycloalkyl, Aryl, vor allem Phenyl, Benzyl oder Phenylethyl und $R^5$ gleich $R^6$ oder $COOR^6$ oder $CONHR^6$ ist.

Stellt die Kupplungskomponente K ein Pyridon dar, so entspricht dieses vorzugsweise der Formel

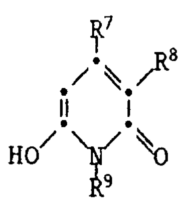

(5)

worin

- $R^7$ Wasserstoff oder $C_1$-$C_4$-Alkyl,
- $R^8$ CN, $CONH_2$ oder $SO_2NH_2$ und
- $R^9$ Wasserstoff oder $C_1$-$C_8$-Alkyl bedeuten.

Die Kupplungskomponente K kann auch ein Dialkylanilin sein. Falls K ein N,N-Dialkylanilin ist, wobei Alkyl z.B. Methyl, Ethyl oder Cyanethyl bedeutet, so muss das Dialkylanilin eine Acylaminogruppe, z.B. eine $C_1$-$C_4$-Alkanoylamino- oder Benzoylaminogruppe, vorzugsweise eine Acetylaminogruppe, tragen, falls in den Farbstoffen der Formel (1) die Ringe A und B ein Pyridinoxazolsystem darstellen und $R^1$ Wasserstoff ist.

In den Farbstoffen der Formel (1) bedeutet $R^1$ Wasserstoff, $C_1$-$C_6$-Alkyl, $C_1$-$C_4$-Alkoxy, Halogen, Nitro, CN, -$NHR^2$, -NH-Acyl, Phenoxy, -$CONHR^2$ oder gegebenenfalls substituiertes Phenyl, wobei 1 bis 3 dieser

Reste, die gleich oder verschieden sein können, vorhanden sind.

Stellt $R^1$ einen Rest -NH$R^2$ oder -CONH$R^2$ dar, so gelten für $R^2$ die zuvor angegebenen Bedeutungen und Bevorzugungen.

Bedeutet $R^1$ -NH-Acyl, so kann es sich bei dem Acylrest wie generell in dieser Anmeldung z.B. um einen $C_2$-$C_6$-Alkanoyl- oder Benzoylrest handeln. Beispiele für geeignete $C_2$-$C_6$-Alkanoylreste sind Acetyl, Propionyl, Butyryl, Isobutyryl, Valeryl, Isovaleryl oder Pivaloyl.

Das Benzoyl kann gegebenenfalls in der zuvor für Phenyl beschriebenen Weise weitersubstituiert sein.

Vorzugsweise handelt es sich bei $R^1$ als -NH-Acyl um -NH-$C_1$-$C_4$-Alkanoyl oder um -NH-Benzoyl, welches unsubstituiert oder mit 1 bis 3 $C_1$-$C_4$-Alkyl, Chlor- oder Methoxygruppen substituiert ist.

Bedeutet $R^1$ Phenoxy, so kann dieses unsubstituiert oder in der zuvor für Phenyl beschriebenen Weise weitersubstituiert sein; vorzugsweise ist das Phenoxy hierbei nicht weitersubstituiert.

$R^1$ steht vorzugsweise für Wasserstoff, $C_1$-$C_4$-Alkoxy, Acylamino oder $C_1$-$C_6$-Alkyl.

Besonders bevorzugte Bedeutungen von $R^1$ sind Wasserstoff, $C_1$-$C_4$-Alkoxy oder $C_1$-$C_4$-Alkyl.

In einer besonders bevorzugten Ausführungsform der erfindungsgemässen Azofarbstoffe bedeutet $R^1$ Methyl oder vor allem Wasserstoff.

Hat X die Bedeutung -N$R^2$-, so gelten für $R^2$ die zuvor geschilderten Bedeutungen und Bevorzugungen.

Vorzugsweise steht X für N und besonders bevorzugt für O.

Z hat bevorzugt die Bedeutung N.

Die bevorzugte Bedeutung von W ist C, oder, falls Z und X N bedeuten, N.

V bedeutet vorzugsweise CH.

Der Ring A kann noch einen ankondensierten Benzolring tragen. Dieser ist vorzugsweise über die C-Atome 2 und 3 des Pyridiniumringes ankondensiert. Falls V C bedeutet, kann er aber auch über die C-Atome 3 und 4 ankondensiert sein. Der ankondensierte Benzolring kann auch Substituenten tragen, z.B. die Substituenten $R^1$.

Besonders bevorzugt sind jedoch Verbindungen der Formel (1), bei denen die Ringe A und B ein Pyridinoxazol-system darstellen.

Der 1,4-Phenylenrest D kann gegebenenfalls durch die üblichen Substituenten wie $C_1$-$C_4$-Alkyl, $C_1$-$C_4$-Alkoxy, Halogen wie Fluor, Chlor, Brom, Nitro oder -CN einfach oder mehrfach substituiert sein. Vorzugsweise handelt es sich bei D um einen unsubstituierten oder mit Chlor oder Methyl substituiertem 1,4-Phenylenrest; besonders bevorzugt stellt D einen nicht weitersubstituierten 1,4-Phenylenrest dar.

Stellt R unsubstituiertes oder substituiertes Alkyl dar, so handelt es sich vor allem um die für $R^2$ aufgeführten Alkylgruppen. Als Alkenylgruppen kommen für R die entsprechenden Gruppierungen mit mindestens einer Doppelbindung in Frage.

Vorzugsweise bedeutet R eine $C_1$-$C_4$-Alkylgruppe, welche unsubstituiert ist oder durch OH, $C_1$-$C_4$-Alkoxy, Phenyl oder $C_1$-$C_4$-Hydroxyalkoxy substituiert ist.

Als Anion $An^{\ominus}$ kommen die für die kationische Farbstoffe üblichen organischen und anorganischen, vorzugsweise farblosen, Anionen in Betracht. Das Anion wird im allgemeinen durch das Herstellungsverfahren (z.B. durch die Quaternierung) oder durch die eventuell vorgenommene Reinigung der rohen Verbindung eingeführt. Man kann Anionen aber auch gezielt nach üblichen Verfahren gegeneinander austauschen.

Beispiele für mögliche Anionen $An^{\ominus}$ sind: Halogenid-, Bortetrafluorid-, Rhodanid-, Sulfat-, Alkylsulfat-, Aminosulfat, Chlorat-, Perchlorat-, Carbonat-, Bicarbonat-, Phosphat-, Phosphormolybdat-, Phosphorwolframat-, Phosphorwolframmolybdat-, Benzolsulfonat-, Chlorbenzolsulfonat-, Naphthalinsulfonat-, Toluolsulfonat-, Oxalat-, Maleinat-, Formiat-, Acetat-, Propionat-, Lactat-, Succinat-, Chloracetat-, Tartrat-, Methansulfonat- und Benzoationen, ferner komplexe Anionen, insbesondere jene von Chlorzinkdoppelsalzen, z.B. das Tetrachlorzinkation.

Zweckmässig bedeutet $An^{\ominus}$ ein Halogenid-, Methylsulfat-, Ethylsulfat-, Phosphat-, Sulfat-, Carbonat-, Benzolsulfonat-, Toluolsulfonat-, 4-Chlorbenzolsulfonat-, Acetat-, Formiat- oder Tetrachlorzinkation; insbesondere liegen die erfindungsgemässen Verbindungen als Halogenide (vor allem Chloride), Methosulfate, Ethosulfate, Sulfate, Benzol- oder Toluolsulfonate oder als Chlorzink-Doppelsalze (z.B. Tetrachlorzinkate) vor.

Von den Verbindungen der Formel (1) sind diejenigen besonders bevorzugt, bei denen K eine Kupplungskomponente der Formel (2), (3), (4) oder (5) bedeutet, $R_1$ Wasserstoff, $C_1$-$C_4$-Alkoxy, $C_1$-$C_6$-Alkyl oder Acylamino, R $C_1$-$C_4$-Alkyl, welches unsubstituiert ist oder durch OH, $C_1$-$C_4$-Alkoxy oder $C_1$-$C_4$-Hydroxyalkoxy substituiert ist, und V CH bedeutet, und die übrigen Symbole die unter der Formel (1) angegebene Bedeutung aufweisen.

Von besonderer praktischer Bedeutung sind Verbindungen der Formel

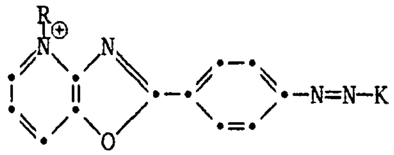 $An^{\ominus}$ (6)

worin

R $C_1$-$C_4$-Alkyl, welches unsubstituiert ist oder durch OH, $C_1$-$C_4$-Alkoxy oder $C_1$-$C_4$-Hydroxyalkoxy substituiert ist,

K eine Kupplungskomponente der Formel

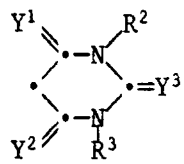 (2)

worin $R^2$ und $R^3$ Wasserstoff oder $C_1$-$C_4$-Alkyl, $Y^1$ und $Y^2$ =O oder =NH und $Y^3$ =O, =NH oder =N-CN bedeuten, oder eine Kupplungskomponente der Formel

$CH_3$-CO-$CH_2$-CO-NH-Ar (3)

worin Ar ein Phenylrest, der ein- oder zweimal substituiert ist durch Methyl, Methoxy oder Acetylamino, und $An^{\ominus}$ ein Anion bedeutet.

Die neuen kationischen Azofarbstoffe der Formel (1) können nach an sich bekannten Verfahren hergestellt werden. Man erhält sie beispielsweise, indem man eine Verbindung der Formel

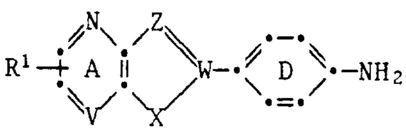 (7)

diazotiert, auf eine Kupplungskomponente HK kuppelt und das Kupplungsprodukt mit einer Verbindung der Formel

R-An (8)

quaterniert, wobei $R^1$, V, Z, X, W, A, D und R wie in Formel (1) definiert sind und An einen bei der Quaternierung in das Anion $An^{\ominus}$ überführbaren Rest bedeutet.

Die Verbindungen der Formel (7) sind bekannt oder können nach an sich bekannten Methoden hergestellt werden. 2-(p-Aminophenyl)oxazolo(4,5-b)pyridin kann z.B. gemäss der in Dyes and Pigments 6, 1-12 (1985) beschriebenen Methode erhalten werden.

Ebenfalls bekannt sind die Kupplungskomponente HK sowie die Verbindungen der Formel (8).

Die Diazotierung der Verbindungen der Formel (7) erfolgt in an sich bekannter Weise, etwa mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Dabei kann eine zusätzliche Säure im Reaktionsmedium anwesend sein, z.B. Phosphorsäure, Schwefelsäure, Essigsäure, Salzsäure oder Mischungen dieser Säuren, z.B. Mischungen aus Phosphorsäure und Essigsäure. Zweckmässig wird die Diazotierung bei Temperaturen von -10 bis 30 °C, z.B. von -10 °C bis Raumtemperatur, durchgeführt.

Die Kupplung der diazotierten Verbindung der Formel (7) auf die Kupplungskomponente HK erfolgt ebenfalls in bekannter Weise, beispielsweise in saurem, wässrigem oder wässrig-organischem Medium, vorteilhaft bei Temperaturen von -10 bis 30 °C, insbesondere unter 10 °C. Als Säuren verwendet man z.B.

Salzsäure, Essigsäure, Schwefelsäure oder Phosphorsäure. Diazotierung und Kupplung können beispielsweise im Eintopfverfahren, also im gleichen Reaktionsmedium, durchgeführt werden.

Die Quaternierung erfolgt zweckmässig in einem indifferenten organischen Lösungsmittel, beispielsweise in einem Kohlenwasserstoff, Chlorkohlenwasserstoff oder Nitrokohlenwasserstoff, wie Benzol, Toluol, Xylol, Tetrachlorethan, Chloroform, Tetrachlorkohlenstoff, Mono- oder Dichlorbenzol oder Nitrobenzol, in einem Säureamid oder Säureanhydrid, wie Dimethylformamid, N-Methylacetamid oder Essigsäureanhydrid, in Dimethylsulfoxid oder in einem Keton, wie Aceton oder Methylethylketon. Anstelle eines organischen Lösungsmittels kann auch ein Ueberschuss des Alkylierungsmittels verwendet werden. Es kann aber auch in wässrigem Medium gearbeitet werden, z.B. in wässriger Suspension oder etwa in Eisessig. Die Quaternierung wird vorteilhaft bei erhöhter Temperatur, z.B. 30-200 °C, insbesondere 80-150 °C, gegebenenfalls unter Zusatz von säurebindenden Mitteln, wie einer anorganischen Base, z.B. Magnesiumoxid, Magnesiumcarbonat, Soda, Calciumcarbonat oder Natriumbicarbonat und gegebenenfalls unter Druck, vorgenommen. Die jeweils günstigsten Bedingungen lassen sich durch einen Vorversuch leicht ermitteln.

Es werden zur Quaternierung bekannte Quaternierungsmittel R-An eingesetzt, die den Rest R einführen und deren Rest An in das Anion $An^{\ominus}$ übergeführt wird. Einige Beispiele für Quaternierungsmittel R-An sind: Alkylhalogenide, Halogenacetamide, β-Halogenpropionitrile, Halogenhydrine, Alkylenoxide, Alkyester der Schwefelsäure oder Alkylester organischer Sulfonsäuren, beispielsweise Methylchlorid, -bromid oder -jodid, Ethylchlorid, -bromid oder -jodid, Propylbromid oder -jodid, Butylbromid, Benzylchlorid oder -bromid, Chloracetamid, β-Chlorpropionitril, Ethylenchlorhydrin, Dimethylsulfat, Diethylsulfat, Dibutylsulfat, Benzolsulfonsäuremethylester, p-Toluolsulfonsäuremethyl, -ethyl-, -propyl- oder -butylester, n-und iso-Propyl- und n-, sec.- und tert. Butylester der Benzolsulfonsäure, Allylchlorid oder -bromid, Methallylchlorid- oder -bromid, Trimethyloxonium-borfluorid, 1,4-Dichlorpropen-(2), 1-Chlor-buten-(2), 1,2-Dichlor-propen-(2), 1-Chlor-2-vinyl-propen-(2), 1-Chlor-pentadien-(2,4), sowie Acrylnitril, Acrylsäure, Acrylsäureamid, Acrylsäuremethylester, Ethylenoxid, Propylenoxid.

Der Rest An bedeutet also vorzugsweise Halogen (z.B. Cl, Br, J), Alkyl-$SO_4$-, Lactat, Formiat oder Acetat.

Nach der Quaternierung können die neuen Verbindungen der Formel (1) vom Reaktionsmedium getrennt und getrocknet oder direkt als Lösung verwendet werden. Falls gewünscht oder erforderlich, (z.B. aus Gründen der Löslichkeit) kann in den erhaltenen Verbindungen der Formel (1) das Anion $An^{\ominus}$ in an sich bekannter Weise gegen ein anderes Anion ausgetauscht werden.

Die Azoverbindungen der Formel (1) werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid-, -acetat in Gegenwart von Entstaubungsmitteln eingestellt, oder die Azoverbindungen werden direkt als Sprühtrocknungspräparationen in den Handel gebracht. Konzentrierte Farbstofflösungen können wässriger oder wässrig/organischer Art sein, wobei übliche und möglichst gut abbaubare Zusätze bevorzugt werden wie organische Säuren, vorzugsweise Essigsäure, Ameisensäure, Milchsäure, Zitronensäure, Amide wie Formamid, Dimethylformamid, Harnstoff, Alkohole wie Glykol, Diglykol, Diglykolether, vorzugsweise Methyl- oder Ethylether.

Verwendung finden die Azoverbindungen der Formel (1) vor allem als Farbstoffe zum Färben und Bedrucken von Papier, Leder und zur Bereitung von Tinten. Bevorzugt werden die neuen Azoverbindungen zum Färben und Bedrucken von Papier, Halbkartons und Kartons in der Masse und in der Oberfläche eingesetzt.

Mit den erfindungsgemässen Farbstoffen lassen sich egale Färbungen bzw. Drucke herstellen, die sich durch sehr gute Allgemeinechtheiten vor allem einen sehr hohen Ausziehgrad und gute Wasserechtheiten auszeichnen.

Des Weiteren können die neuen Azoverbindungen der Formel (1) auch zum Färben und Bedrucken von natürlichen und regenerierten Cellulosematerialien, vor allem von Baumwolle und Viscose verwendet werden, wobei man ebenfalls farbstarke Ausfärbungen erhält.

Die neuen Azoverbindungen der Formel (1) haben ein gutes Ziehvermögen, einen guten Ausziehgrad und die erhaltenen Färbungen weisen sehr gute Echtheiten, vor allem Nassechtheiten auf.

Eine bevorzugte Verwendung der neuen Azoverbindungen der Formel (1) liegt in der Anwendung zum Färben von Papier aller Arten, vor allem von gebleichtem ungeleimtem und geleimtem ligninfreiem Papier, wobei von gebleichtem oder ungebleichtem Zellstoff ausgegangen werden kann und Laub- oder Nadelholz-Zellstoff, wie Birken- und/oder Kiefernsulfit und/oder Sulfat-Zellstoff verwendet werden kann. Ganz besonders geeignet sind diese Verbindungen zum Färben von ungeleimtem Papier (z.B. Servietten, Tischdecken, Hygienepapieren) als Folge ihrer sehr hohen Affinität zu diesem Substrat.

Die neuen Azoverbindungen der Formel (1) ziehen auf diese Substrate sehr gut auf, wobei die Abwässer praktisch farblos bleiben.

Man erhält Färbungen in gelben, grüngelben oder orangen Nuancen.

Die erhaltenen Färbungen zeichnen sich durch gute Allgemeinechtheiten aus, wie eine gute Lichtechtheit bei gleichzeitig hoher Klarheit und Farbstärke und Nassechtheit, d.h. sie zeigen keine Neigung zum Ausbluten, wenn gefärbtes Papier in nassem Zustand mit feuchtem weissem Papier in Berührung gebracht wird. Darüber hinaus weisen sie eine gute Alaun-, Säure- und Alkali-Echtheit auf. Die Nassechtheit bezieht sich nicht nur auf Wasser, sondern auch auf Milch, Fruchtsäfte und gesüsstes Mineralwasser; wegen ihrer guten Alkoholechtheit sind sie auch gegen alkoholische Getränke beständig. Diese Eigenschaft ist Z.B. besonder für Servietten und Tischdecken erwünscht, bei denen vorhersehbar ist, dass das gefärbte Papier in nassen Zustand (z.B. getränkt mit Wasser, Alkohol, Tensid-Lösung etc....) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil.

Ein weiterer Gegenstand der vorliegenden Erfindung ist somit die Verwendung von Azofarbstoffen der Formel

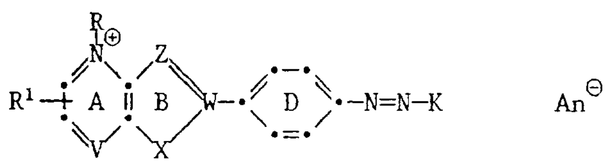

(2)

oder deren tautomere Formen, worin bedeuten:

| | |
|---|---|
| Z | N, S oder CH, |
| X | O, S, $NR^2$ oder N, |
| V | N oder CH, |
| W | N oder C, |
| K | eine Kupplungskomponente, |
| R | unsubstituiertes oder substituiertes Alkyl oder Alkenyl, |
| $R^1$ | Wasserstoff, $C_1$-$C_6$-Alkyl, $C_1$-$C_4$-Alkoxy, Halogen, Nitro, -CN, $-NHR^2$, -NH-Acyl, Phenoxy, -COOH, $COOR^2$ , $-CONHR^2$ oder gegebenenfalls substituiertes Phenyl, wobei $R^2$ Wasserstoff, gegebenenfalls substituiertes $C_1$-$C_6$-Alkyl oder gegebenenfalls substituiertes Phenyl bedeutet, |
| D | einen gegebenenfalls weitersubstituierten 1,4-Phenylenrest, wobei der Ring A noch einen ankondensierten Benzolring tragen kann, und |
| $An^{\ominus}$ | ein Anion, |

zum Färben und Bedrucken von Papier aller Arten.

Die folgenden Beispiele veranschaulichen die Erfindung. Teile sind - sofern nichts anderes angegeben - Gewichtsteile und die Temperaturen sind in Grad Celsius angegeben.

Die Abkürzung RKN stellt eine Qualitätsbezeichnung dar und gibt den Reinheitsgrad der Cellulose an; die Abkürzung SR (Schopper-Riegler) gibt den Mahlgrad an.

<u>Beispiel 1:</u>

a) 14 Teile p-Aminobenzoesäure und 11 Teile 2-Amino-3-hydroxypyridin werden 1 Stunde in 100 Teilen Polyphosphorsäure bei 200 °C gerührt. Das Reaktionsgemisch wird auf 150 ° gekühlt und dann auf Eis gegossen. Das ausgefallene Reaktionsprodukt der Formel

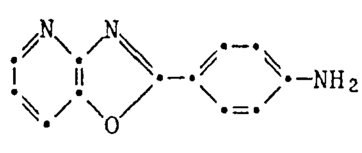

wird abgesaugt, mit Wasser neutral gewaschen und getrocknet.

b) 6,4 Teile dieses Zwischenproduktes werden in 200 Teilen Wasser mit 8 Teilen 30%iger Salzsäure und 8 Teilen 4n Natriumnitrit in üblicher Art und Weise diazotiert. Die Diazolösung wird zu einem Gemisch von 6,2 Teilen Acetessigsäure-o-anisidid, 4 Teilen 30%iger-Natronlauge und 150 Teilen Wasser bei 0-5 ° zugetropft. Der pH des Reaktionsgemisches wird dann mit 15 Teilen 2n-Natronlauge auf 9 gestellt, wobei

der Farbstoff der Formel

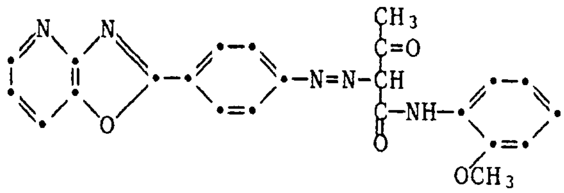

ausfällt. Das Produkt wird abgesaugt, mit Wasser neutral gewaschen und getrocknet.

c) 4,3 Teile des unter b) erhaltenen Farbstoffes werden in 50 Teilen Dimethylformamid mit 2 Teilen Dimethylsulfat 3 Stunden bei 110° gerührt. Der Farbstoff der Formel

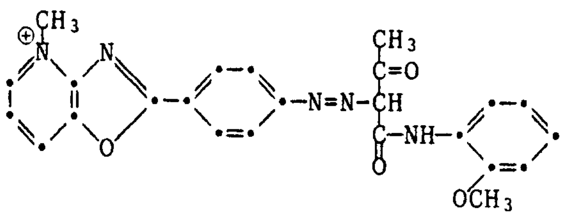

$CH_3SO_4^{\ominus}$

wird durch Filtration isoliert und getrocknet. Er färbt Papier in brillanten grünstichig gelben Nuancen, zeigt eine sehr gute Lichtechtheit und einen ausgezeichneten Aufbau.

Beispiele 2-19: Verfährt man wie im Beispiel 1 angegeben, verwendet jedoch die in Spalte 2 der folgenden Tabelle aufgeführten Diazokomponenten und die in Spalte 3 genannten Kupplungskomponenten, so erhält man nach Quaternierung mit den in Spalte 4 verzeichneten Quaternierungsmitteln Azofarbstoffe, die Papier in den in Spalte 5 angegebenen Nuancen färben.

| Bsp. | Diazokomponente | Kupplungskomponente | Quaternierungs-mittel | Nuance auf Papier |
|---|---|---|---|---|
| 2 | 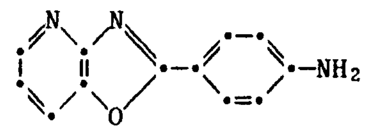 | 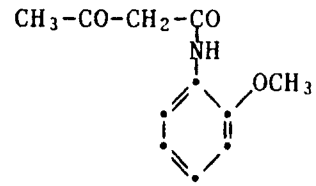 | Diethylsulfat | grüngelb |
| 3 | 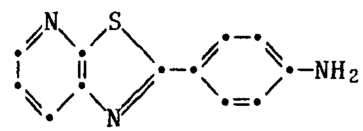 | 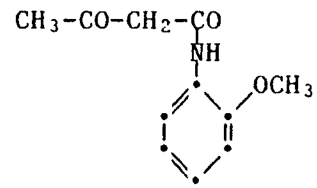 | Dimethylsulfat | grüngelb |
| 4 | 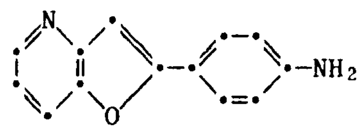 | 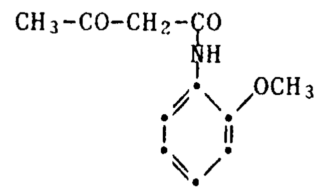 | Dimethylsulfat | gelb |
| 5 | 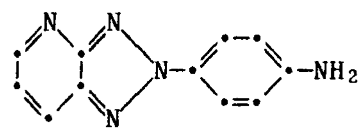 | 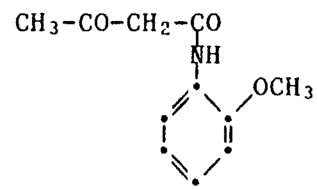 | Dimethylsulfat | grüngelb |

| Bsp. | Diazokomponente | Kupplungskomponente | Quaternierungs-mittel | Nuance auf Papier |
| --- | --- | --- | --- | --- |
| 6 | 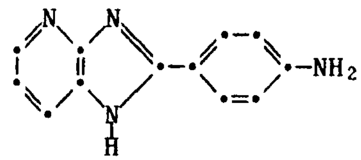 | 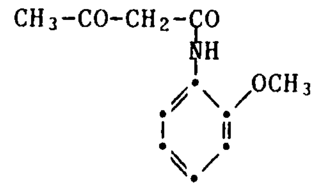 | Dimethylsulfat | grüngelb |
| 7 | 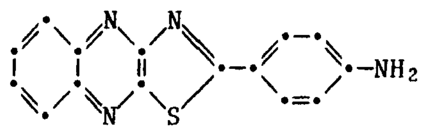 | 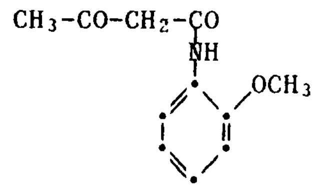 | Dimethylsulfat | grüngelb |
| 8 | 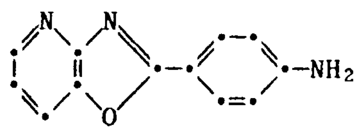 | 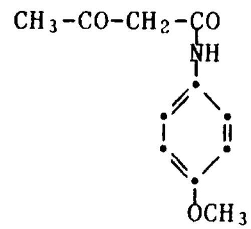 | Diethylsulfat | grüngelb |
| 9 | 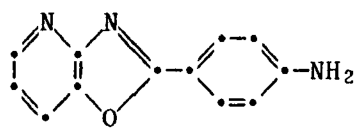 | 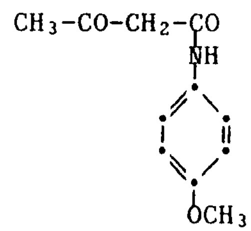 | Dimethylsulfat | grüngelb |

| Bsp. | Diazokomponente | Kupplungskomponente | Quaternierungsmittel | Nuance auf Papier |
|---|---|---|---|---|
| 10 | 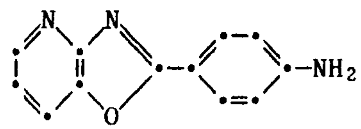 | 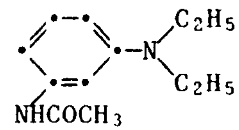 | Dimethylsulfat | orange |
| 11 | 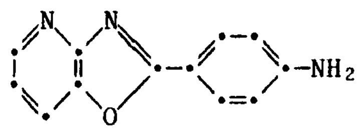 | 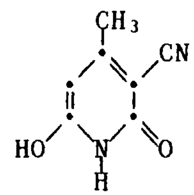 | Dimethylsulfat | gelb |
| 12 | 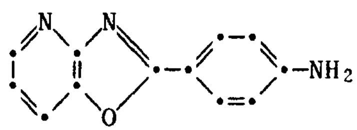 | 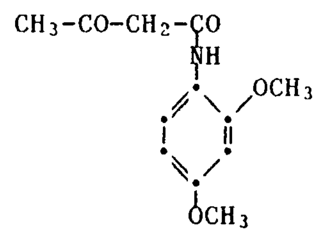 | Dimethylsulfat | gelb |
| 13 | 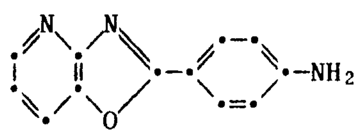 | 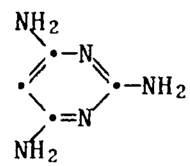 | Dimethylsulfat | gelb |
| 14 | 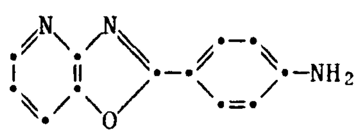 | 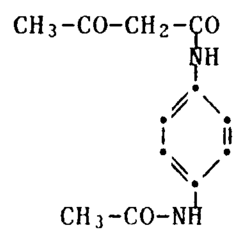 | Dimethylsulfat | grüngelb |

| Bsp. | Diazokomponente | Kupplungskomponente | Quaternierungsmittel | Nuance auf Papier |
|---|---|---|---|---|
| 15 | 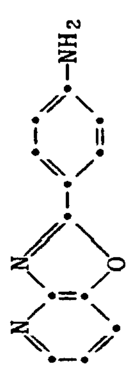 | 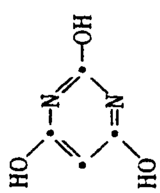 | Dimethylsulfat | gelb |
| 16 | 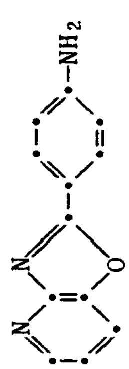 | 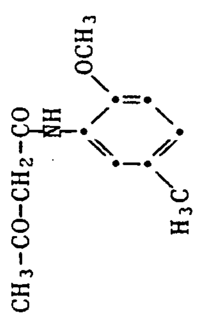 | Dimethylsulfat | grüngelb |
| 17 | 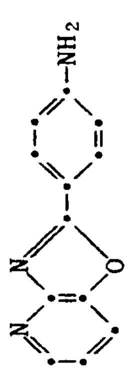 | 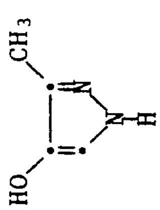 | Dimethylsulfat | gelb |
| 18 | 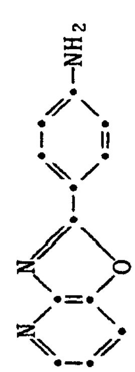 | 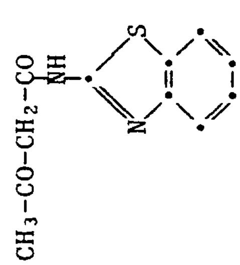 | Dimethylsulfat | grüngelb |
| 19 | 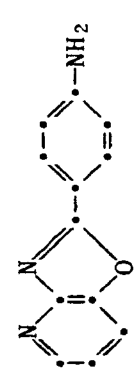 | 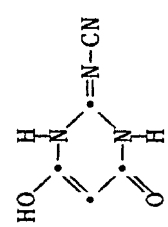 | Dimethylsulfat | gelb |

Beispiel 20: Man vermischt 50 Teile chemisch gebleichtes Buche-Sulfit mit 50 Teilen gebleichtem RKN 15 (Mahlgrad 22° SR) und 2 Teilen des Farbstoffes gemäss Beispiel 1 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist in einer sehr intensiven grünstichig gelben Nuance gefärbt. Das Abwasser ist völlig farblos. Der Ausziehgrad erreicht praktisch 100 %. Die Licht- und Nassechtheiten sind ausgezeichnet.

Beispiel 21: Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert

(0,5 %ige Färbung, Flottenverhältnis 1:400, Wasserhärte 10° dH, pH 6, Temperatur 20°).

Es entsteht auf der Papierbahn eine farbstarke grüngelbe Färbung von mittlerer Intensität. Das Abwasser ist völlig farblos.

Beispiel 22: 10 Teile Baumwollgewebe (gebleichte mercerisierte Baumwolle) werden in einem Labor-Baumfärbeapparat in 200 Teilen einer Flotte (Wasserhärte 10° dH, pH 4, 3 Umwälzungen der Färbeflotte pro Minute) die 0,05 Teile des Farbstoffes gemäss Beispiel 1 enthält, gefärbt. Die Temperatur wird in 60 Minuten von 20° auf 100° erhöht, dann während 15 Minuten konstant gehalten.

Die Färbeflotte ist völlig ausgezogen. Es entsteht auf dem Baumwollgewebe eine farbstarke grün-gelbe Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material mit dem Farbstoff des Beispiels 1 eine farbstarke grün-gelbe Färbung, die eine gute Lichtechtheit und sehr gute Nassechtheit besitzt.

**Patentansprüche**

**1.** Azofarbstoffe der Formel

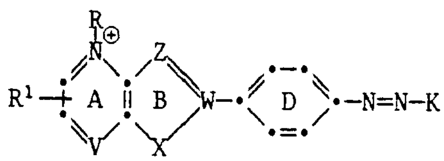

An$^{\ominus}$ (1)

oder deren tautomere Formen, worin bedeuten:

| | |
|---|---|
| Z | N, S oder CH, |
| X | O, S, $NR^2$ oder N, |
| V | N oder CH, |
| W | N oder C, |
| K | eine Kupplungskomponente aus der Reihe der Acylacetarylamide, Phenole, Pyridone, Chinoline, Pyrazole, Indole, Diphenylamine, Aminopyridine, Pyrimidine, Pyrimidone, Naphthole, Naphthylamine, Aminothiazole, Thiophene oder Hydroxypyridine, |
| R | unsubstituiertes oder substituiertes Alkyl oder Alkenyl, |
| $R^1$ | Wasserstoff, $C_1$-$C_6$-Alkyl, $C_1$-$C_4$-Alkoxy, Halogen, Nitro, -CN, -$NHR^2$, -NH-Acyl, Phenoxy, $COOR^2$, -$CONHR^2$ oder gegebenenfalls substituiertes Phenyl, wobei $R^2$ Wasserstoff, gegebenenfalls substituiertes $C_1$-$C_6$-Alkyl oder gegebenenfalls substituiertes Phenyl bedeutet, |
| D | einen gegebenenfalls weitersubstituierten 1,4-Phenylenrest und |
| $An^{\ominus}$ | ein Anion, wobei der Ring A noch einen ankondensierten, gegebenenfalls substituierten Benzolring tragen kann. |

**2.** Azofarbstoffe gemäss Anspruch 1, dadurch gekennzeichnet, dass K eine Kupplungskomponente aus der Reihe der Pyrimidine, Acetessigarylamide, Pyrazole oder Pyridone bedeutet.

**3.** Azofarbstoffe gemäss Anspruch 2, dadurch gekennzeichnet, dass K eine Verbindung der Formel

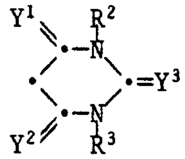

(2)

worin

| | |
|---|---|
| $Y^1$ und $Y^2$ | unabhängig voneinander =O, =NH oder =N-$C_1$-$C_6$-Alkyl, |
| $Y^3$ | =O, =S, =$NR^2$ oder =N-CN und |
| $R^2$ und $R^3$ | unabhängig voneinander Wasserstoff, gegebenenfalls substituiertes $C_1$-$C_6$-Alkyl oder gegebenenfalls substituiertes Phenyl bedeuten, oder eine Verbindung der Formel |

$CH_3$-CO-$CH_2$-CO-NH-Ar (3)

worin Ar ein Phenyl, Naphthyl- oder Benzthiazolyl-2-rest ist, welcher durch $C_1$-$C_4$-Alkyl, $C_1$-$C_4$-Alkoxy, Chlor, Brom, Nitro oder Acetylamino substituiert sein kann, oder eine Verbindung der Formel

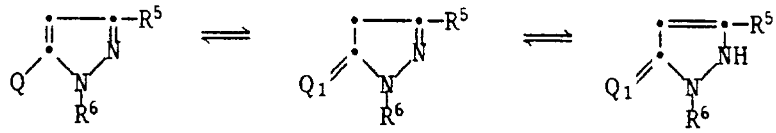
(4),

worin Q OH oder $NH_2$, $Q_1$ O oder NH, $R^6$ H, $C_1$-$C_4$-Alkyl, Alkenyl, Cycloalkyl, Aryl, vor allem Phenyl, Benzyl oder Phenylethyl und $R^5$ gleich $R^6$ oder $COOR^6$ oder $CONHR^6$ ist, oder eine Verbindung der Formel

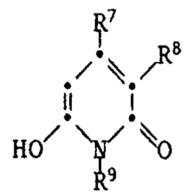
(5)

worin

| | |
|---|---|
| $R^7$ | Wasserstoff oder $C_1$-$C_4$-Alkyl, |
| $R^8$ | CN, $CONH_2$ oder $SO_2NH_2$ und |
| $R^9$ | Wasserstoff oder $C_1$-$C_8$-Alkyl bedeuten, |

darstellt.

**4.** Azofarbstoffe gemäss Anspruch 3, dadurch gekennzeichnet, dass K eine Verbindung der Formel (2) bedeutet, worin $Y^1$ und $Y^2$ =O oder =NH, $R^2$ und $R^3$ Wasserstoff oder $C_1$-$C_4$-Alkyl und $Y^3$ =O, =NH oder =N-CN bedeutet.

**5.** Azofarbstoffe gemäss Anspruch 3, dadurch gekennzeichnet, dass K eine Verbindung der Formel (3) ist, worin Ar ein Phenylrest ist, der ein- oder zweimal substituiert ist durch Methyl, Methoxy oder Acetylamino.

**6.** Azofarbstoffe gemäss einem der Ansprüche 1 bis 5, worin $R^1$ Wasserstoff, $C_1$-$C_4$-Alkyl oder $C_1$-$C_4$-Alkoxy ist.

**7.** Azofarbstoffe gemäss einem der Ansprüche 1 bis 6, dadurch gekennzeichnet, dass X für O oder N steht.

**8.** Azofarbstoffe gemäss einem der Ansprüche 1 bis 7, dadurch gekennzeichnet, dass Z N ist.

**9.** Azofarbstoffe gemäss einem der Ansprüche 1 bis 8, dadurch gekennzeichnet, dass W für C oder, falls Z und X N bedeuten, für N steht.

**10.** Azofarbstoffe gemäss einem der Ansprüche 1 bis 9, dadurch gekennzeichnet, dass V CH bedeutet.

**11.** Azofarbstoffe gemäss einem der Ansprüche 1 bis 10, dadurch gekennzeichnet, dass die Ringe A und B ein Pyridinoxazolsystem darstellen.

**12.** Azofarbstoffe gemäss einem der Ansprüche 1 bis 10, dadurch gekennzeichnet, dass der 1,4-Phenylenrest D nicht weitersubstituiert ist.

**13.** Azofarbstoffe gemäss einem der Ansprüche 1-12, dadurch gekennzeichnet, dass R eine $C_1$-$C_4$-Alkylgruppe, welche unsubstituiert ist oder durch OH, $C_1$-$C_4$-Alkoxy, Phenyl oder $C_1$-$C_4$-Hydroxyalkoxy substituiert ist, bedeutet.

**14.** Azofarbstoffe gemäss Ansprüchen 1 und 3, worin K eine Kupplungskomponente der Formel (2), (3), (4) oder (5) bedeutet, $R_1$ Wasserstoff, $C_1$-$C_4$-Alkoxy, $C_1$-$C_6$-Alkyl oder Acylamino, R $C_1$-$C_4$-Alkyl, welches unsubstituiert ist oder durch OH, $C_1$-$C_4$-Alkoxy oder $C_1$-$C_4$-Hydroxyalkoxy substituiert ist, und V CH bedeutet, und die übrigen Symbole die unter der Formel (1) angegebene Bedeutung aufweisen.

**15.** Azofarbstoffe gemäss Anspruch 1 der Formel

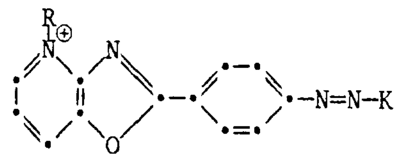 $An^{\ominus}$ (6)

worin

R $C_1$-$C_4$-Alkyl, welches unsubstituiert ist oder durch OH, $C_1$-$C_4$-Alkoxy oder $C_1$-$C_4$-Hydroxyalkoxy substituiert ist,

K eine Kupplungskomponente der Formel

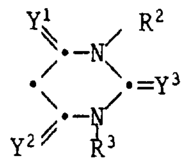 (2)

worin $R^2$ und $R^3$ Wasserstoff oder $C_1$-$C_4$-Alkyl, $Y^1$ und $Y^2$ =O oder =NH und $Y^3$ =O, =NH oder =N-CN bedeuten, oder eine Kupplungskomponente der Formel

$CH_3$-CO-$CH_2$-CO-NH-Ar (3)

worin Ar ein Phenylrest, der ein- oder zweimal substituiert ist durch Methyl, Methoxy oder Acetylamino, und

$An^{\ominus}$ ein Anion bedeutet.

**16.** Verfahren zur Herstellung von Verbindungen der Formel (1) gemäss Anspruch 1, dadurch gekennzeichnet, dass man eine Verbindung der Formel

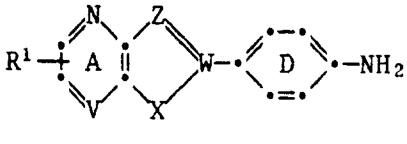 (7)

diazotiert, auf eine Kupplungskomponente HK kuppelt und das Kupplungsprodukt mit einer Verbindung der Formel

R-An (8)

quaterniert, wobei $R^1$, V, Z, X, W, A, C und R wie in Formel (1) definiert sind und An einen bei der Quaternierung in das Anion $An^{\ominus}$ überführbaren Rest bedeutet.

17. Verwendung der Verbindungen der Formel (1) gemäss Anspruch 1 als Farbstoffe zum Färben und Bedrucken von Papier, Leder und zur Bereitung von Tinten.

18. Verwendung von Azofarbstoffen der Formel

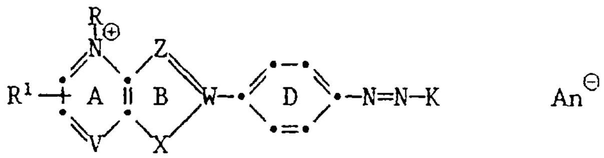

(2)

oder deren tautomere Formen, worin bedeuten:

| | |
|---|---|
| Z | N, S oder CH, |
| X | O, S, $NR^2$ oder N, |
| V | N oder CH, |
| W | N oder C, |
| K | eine Kupplungskomponente, |
| R | unsubstituiertes oder substituiertes Alkyl oder Alkenyl, |
| $R^1$ | Wasserstoff, $C_1$-$C_6$-Alkyl, $C_1$-$C_4$-Alkoxy, Halogen, Nitro, -CN, $-NHR^2$, -NH-Acyl, Phenoxy, -COOH, $COOR^2$, $-CONHR^2$ oder gegebenenfalls substituiertes Phenyl, wobei $R^2$ Wasserstoff, gegebenenfalls substituiertes $C_1$-$C_6$-Alkyl oder gegebenenfalls substituiertes Phenyl bedeutet, |
| D | einen gegebenenfalls weitersubstituierten 1,4-Phenylenrest, wobei der Ring A noch einen ankondensierten Benzolring tragen kann, und |
| $An^{\ominus}$ | ein Anion, |

zum Färben und Bedrucken von Papier aller Arten.

19. Das gemäss Anspruch 18 erhaltene gefärbte Papier.

## Claims

1. An azo dye of the formula

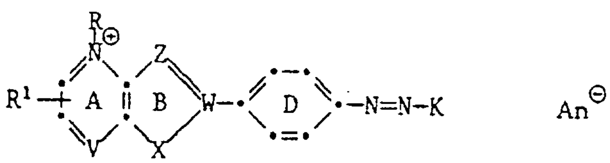

(1)

or a tautomeric form thereof, in which: Z is N, S or CH, X is O, S, $NR^2$ or N, V is N or CH, W is N or C, K is a coupling component from the series comprising acylacetarylamides, phenols, pyridones, quinolines pyrazoles, indoles, diphenylamines, aminopyridines, pyrimidines, pyrimidones, naphthols, naphthylamines, aminothioazoles, thiophenes or hydroxypyridines, R is unsubstituted or substituted alkyl or alkenyl, $R^1$ is hydrogen, $C_1$-$C_6$alkyl, $C_1$-$C_4$alkoxy, halogen, nitro, -CN, $-NHR^2$, -NH-acyl, phenoxy, $COOR^2$, $-CONHR^2$ or substituted or unsubstituted phenyl, $R^2$ being hydrogen, substituted or unsubstituted $C_1$-$C_6$alkyl or substituted or unsubstituted phenyl, D is a 1,4-phenylene radical which may be further substituted and $An^{\ominus}$ is an anion, the ring A also being able to carry a fused-on, substituted or unsubstituted benzene ring.

2. An azo dye according to claim 1, wherin K is a coupling component from the series comprising pyrimidines, acetoacetylarylamides, pyrazoles or pyridones.

**3.** An azo dye according to claim 2, wherin K is a compound of the formula

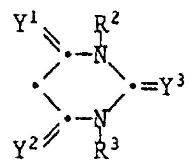

(2)

in which $Y^1$ and $Y^2$ independently of one another are $=O$, $=NH$ or $=N\text{-}C_1\text{-}C_6$alkyl, $Y^3$ is $=O$, $=S$, $=NR^2$ or $=N\text{-}CN$ and $R^2$ and $R^3$ independently of one another are hydrogen, substituted or unsubstituted $C_1$-$C_6$alkyl or substituted or unsubstituted phenyl, or a compound of the formula

$CH_3\text{-}CO\text{-}CH_2\text{-}CO\text{-}NH\text{-}Ar$ (3)

in which Ar is a phenyl, naphthyl or benzothiazol-2-yl radical which can be substituted by $C_1$-$C_4$alkyl, $C_1$-$C_4$alkoxy, chlorine, bromine, nitro or acetylamino, or a compound of the formula

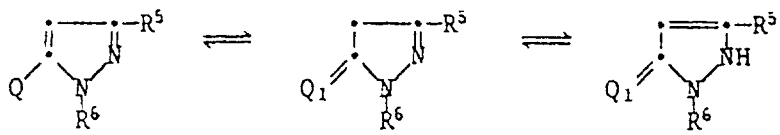

(4),

in which Q is OH or $NH_2$, $Q_1$ is O or NH, $R^6$ is H, $C_1$-$C_4$alkyl, alkenyl, cycloalkyl, aryl, in particular phenyl, benzyl or phenylethyl, and $R^5$ is identical with $R^6$ or is $COOR^6$ or $CONHR^6$, or a compound of the formula

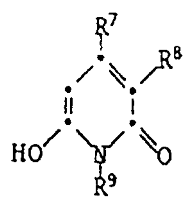

(5)

in which $R^7$ is hydrogen or $C_1$-$C_4$alkyl, $R^8$ is CN, $CONH_2$ or $SO_2NH_2$ and $R^9$ is hydrogen or $C_1$-$C_8$alkyl.

**4.** An azo dye according to claim 3, wherein K is a compound of the formula (2) in which $Y^1$ and $Y^2$ are $=O$ or $=NH$, $R^2$ and $R^3$ are hydrogen or $C_1$-$C_4$alkyl and $Y^3$ is $=O$, $=NH$ or $=N\text{-}CN$.

**5.** An azo dye according to claim 3, wherein K is a compound of the formula (3) in which Ar is a phenyl radical which is monosubstituted or disubstituted by methyl, methoxy or acetylamino.

**6.** An azo dye according to any one of claims 1 to 5, in which $R^1$ is hydrogen, $C_1$-$C_4$alkyl or $C_1$-$C_4$alkoxy.

**7.** An azo dye according to any one of claims 1 to 6, wherein X is O or N.

**8.** An azo dye according to any one of claims 1 to 7, wherein Z is N.

**9.** An azo dye according to any one of claims 1 to 8, wherein W is C or, if Z and X are N, is N.

**10.** An azo dye according to any one of claims 1 to 9, wherein V is CH.

**11.** An azo dye according to any one of claims 1 to 10, wherein the rings A and B constitute a pyridineoxazole system.

**12.** An azo dye according to any one of claims 1 to 10, wherein the 1,4-phenylene radical D is not further substituted.

**13.** An azo dye according to any one of claims 1 to 12, wherein R is a $C_1$-$C_4$alkyl group which is unsubstituted or is substituted by OH, $C_1$-$C_4$alkoxy, phenyl or $C_1$-$C_4$hydroxyalkoxy.

**14.** An azo dye according to claims 1 and 3, wherein K is a coupling component of the formula (2), (3), (4) or (5), $R_1$ is hydrogen, $C_1$-$C_4$alkoxy, $C_1$-$C_6$alkyl or acylamino, R is $C_1$-$C_4$alkyl which is unsubstituted or substituted by OH, $C_1$-$C_4$alkoxy or $C_1$-$C_4$hydroxyalkoxy, and V is CH, and the remaining symbols are as defined under the formula (1).

**15.** An azo dye according to claim 1, of the formula

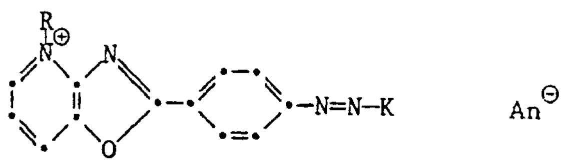 (6)

in which R is $C_1$-$C_4$alkyl which is unsubstituted or substituted by OH, $C_1$-$C_4$alkoxy or $C_1$-$C_4$hydroxyalkoxy, K is a coupling component of the formula

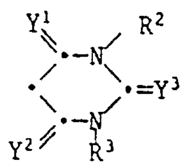 (2)

in which $R^2$ and $R^3$ are hydrogen or $C_1$-$C_4$alkyl, $Y^1$ and $Y^2$ are =O or =NH and $Y^3$ is =O, =NH or =N-CN, or a coupling component of the formula

$CH_3$-CO-$CH_2$-CO-NH-Ar (3)

in which Ar is a phenyl radical which is monosubstituted or disubstituted by methyl, methoxy or acetylamino, and $An^{\ominus}$ is an anion.

**16.** A process for the preparation of compounds of the formula (1) according to claim 1, which comprises diazotizing a compound of the formula

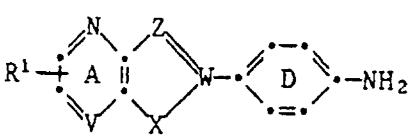 (7)

coupling the product with a coupling component HK and quaternizing the coupling product with a compound of the formula

R-An (8),

$R^1$, V, Z, X, W, A, D and R being as defined for formula (1) and An being a radical which can be converted into the anion $An^{\ominus}$ in the course of the quaternization.

**17.** The use of compounds of the formula (1) according to claim 1 as dyes for dyeing and printing paper or leather and for preparing inks.

**18.** The use of azo dyes of the formula

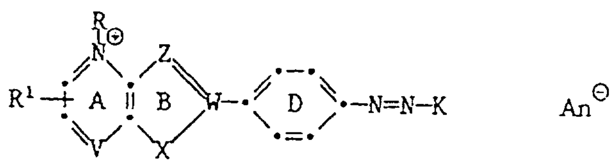

(2)

or tautomeric forms thereof in which: Z is N, S or CH, X is O, S, $NR^2$ or N, V is N or CH, W is N or C, K is a coupling component, R is unsubstituted or substituted alkyl or alkenyl, $R^1$ is hydrogen, $C_1$-$C_6$alkyl, $C_1$-$C_4$alkoxy, halogen, nitro, -CN, $-NHR^2$, -NH-acyl, phenoxy, -COOH, $COOR^2$, $-CONHR^2$ or substituted or unsubstituted phenyl, $R^2$ being hydrogen, substituted or unsubstituted $C_1$-$C_6$alkyl or substituted or unsubstituted phenyl, D is a 1,4-phenylene radical which may be further substituted, the ring A also being able to carry a fused-on benzene ring, and $An^{\ominus}$ is an anion, for dyeing and printing paper of all types.

**19.** The dyed paper obtained in accordance with claim 18.

**Revendications**

**1.** Colorants azoïques de formule

(1)

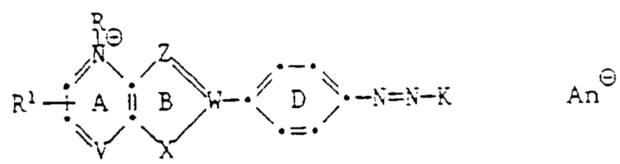

ou leurs formes tautomères, dans laquelle :

| | |
|---|---|
| Z | signifie N, S ou CH, |
| X | signifie O, S, $NR^2$ ou N, |
| V | signifie N ou CH, |
| W | représente N ou C, |
| K | représente un copulant de la série des acylacétarylamides, phénols, pyridones, quinoléines, pyrazoles, indoles, diphénylamines aminopyridines, pyrimidines, pyrimidones, naphtols; naphtylamines, aminothiazoles, thiophènes ou hydroxypyridines, |
| R | représente un groupe alkyle ou alcényle substitué ou non substitue, |
| $R^1$ | représente un atome d'hydrogène, un groupe alkyle en $C_{1-6}$, alcoxy en $C_{1-4}$, halogéno, nitro, -CN, $-NHR^2$, -NH-acyle, phénoxy, $-COOR^2$,$-CONHR^2$ ou phényle éventuellement substitué, $R^2$ étant un atome d'hydrogène, un alkyle en $C_{1-6}$ éventuellement substitué ou un phényle éventuellement substitué, |
| D | représente un résidu 1,4-phénylène pouvant à son tour eue substitué, |
| $An^-$ | représente un anion, |
| | le noyaux A pouvant être condensé avec un autre noyau benzénique éventuellement substitué. |

**2.** Colorants azoïques conformes à la revendication 1, caractérisés en ce que K représente un copulant de la série des pyrimidines, acétylacétarylamides, pyrazoles ou pyridones.

**3.** Colorants azoïques conformes à la revendication 2, caractérisés en ce que K représente un composé de formule

(2)

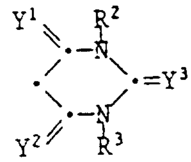

dans laquelle

- $Y^1$ et $Y^2$ représentent indépendamment l'un de l'autre un =O, =NH ou =N-alkyle $C_{1-6}$,
- $Y^3$ représente un =O, =S, $=NR^2$ ou =N-CN et
- $R^2$ et $R^3$ représentent indépendamment un atome d'hydrogène, un résidu alkyle en $C_{1-6}$ éventuellement substitué ou un résidu phényle éventuellement substitué,

ou un composé de formule

(3) $CH_3$-CO-$CH_2$-NH-Ar

dans laquelle Ar représente un groupe phényle, naphtyle ou benzothiazol-2-yle, pouvant être substitué par un groupe alkyle en $C_{1-4}$, alcoxy en $C_{1-4}$, un atome de chlore ou de brome, un groupe nitro ou acétylamino,

ou un composé de formule

(4)

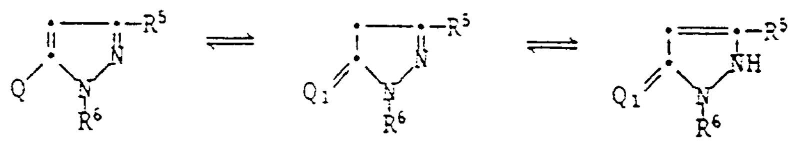

dans laquelle Q représente un groupe QH ou $NH_2$, $Q^1$ un O ou NH,$R^6$ un atome d'hydrogène ou un groupe alkyle en $C_{1-4}$, alcényle, cycloalkyle, aryle, surtout phényle, benzyle ou phényléthyle et $R^5$ est égal à $R^6$ ou à un groupe-$COOR^6$ ou $CONHR^6$, ou un composé de formule

(5)

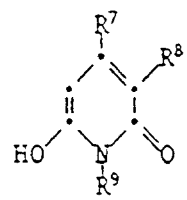

dans laquelle

- $R^7$ représente un atome d'hydrogène ou un groupe alkyle en $C_{1-4}$,
- $R^8$ représente un groupe CN, $CONH_2$ ou $SO_2NH_2$ et
- $R^9$ représente un atome d'hydrogène ou un groupe alkyle en $C_{1-8}$.

**4.** Colorants azoïques conformes à la revendication 3, caractérisés en ce que K représente un composé de formule (2), dans laquelle $Y^1$ et $Y^2$ représentent un résidu =O ou =NH, $R^2$ et $R^3$ un atome d'hydrogène ou un groupe alkyle en $C_{1-4}$ et $Y^3$ un résidu =O, NH ou =N-CN.

**5.** Colorants azoïques conformes à la revendication 3, caractérisés en ce que K représente un composé de formule (3), dans laquelle Ar représente un résidu phényle substitué par un ou deux substituants méthyle, méthoxy ou acétylamino.

**6.** Colorants azoïques conformes à une des revendications 1 à 5, dans lesquels $R^1$ représente un atome d'hydrogène, un groupe alkyle en $C_{1-4}$ ou alcoxy en $C_{1-4}$.

**7.** Colorants azoïques conformes à une des revendications 1 à 6, caractérisés en ce que X représente un atome d'oxygène ou d'azote.

8. Colorants azoïques conformes à une des revendications 1 à 7, caractérisés en ce que Z représente un atome d'azote.

9. Colorants azoïques conformes à une des revendications 1 à 8, caractérisés en ce que W représente un atome de carbone ou, dans le cas où Z et X sont des atomes d'azote, un atome d'azote.

10. Colorants azoïques conformes à une des revendications 1 à 9; caractérisés en ce que V représente un résidu CH.

11. Colorants azoïques conformes à une des revendications 1 à 10, caractérisés en ce que les noyaux A et B représentent un système pyridinoxazole.

12. Colorants azoïques conformes à une des revendications 1 à 10, caractérisés en ce que le résidu phénylène-1,4 D n'est pas substitué à son tour.

13. Colorants azoïques conformes à une des revendications 1 à 12, caractérisés en ce que R représente un groupe alkyle en $C_{1-4}$, qui est non substitué ou substitué par OH, alcoxy en $C_{1-4}$, phényle ou hydroxyalcoxy en $C_{1-4}$.

14. Colorants azoiques conformes aux revendications 1 à 3, dans lesquels K représente un copulant de formule (2), (3), (4) ou (5), $R^1$ représente un atome d'hydrogène, un groupe alcoxy en $C_{1-4}$, un groupe alkyle en $C_{1-6}$ ou un groupe acylamino, R représente un groupe alkyle en $C_{1-4}$, pouvant être substitué ou non par un -OH, alcoxy en $C_{1-4}$ ou hydroxyalcoxy en $C_{1-4}$ et V représente un -CH, les autres symboles ayant la signification indiquée pour la formule (1).

15. Colorants azoïques conformes à la revendication 1 de formule

(6) 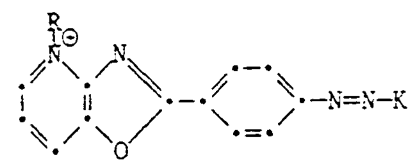 $An^{\ominus}$

dans laquelle

R représente un groupe alkyle en $C_{1-4}$, substitué ou non par un résidu-OH, alcoxy en $C_{1-4}$ ou hydroxyalcoxy en $C_{1-4}$,

K représente un copulant de formule

(2) 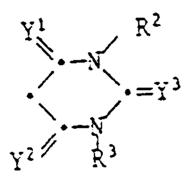

dans laquelle

$R^2$ et $R^3$ représentent un atome d'hydrogène ou un groupe alkyle en $C_{1-4}$,

$Y^1$ et $Y^2$ représentent un résidu =O ou =NH et

$Y^3$ un résidu =O, =NH ou =N-CN, ou un copulant de formule

(3) $CH_3$-CO-$CH_2$-NH-Ar

dans laquelle Ar représente un groupe phényle, substitué par un ou deux résidus méthyle, méthoxy ou acétylamino et

$An^-$ représente un anion.

**16.** Procédé pour la préparation de composés de formule (1) conformes à la revendication 1, caractérisé en ce que l'on soumet un composé de formule

(7) 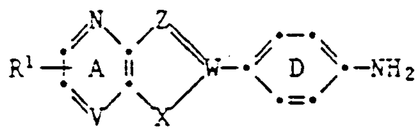

à une diazotation, que l'on copule ce composé sur un copulant HK et que l'on quaternise le produit de copulation à l'aide d'un composé de formule

(8) R-An

$R^1$, V, Z, X, W, A, D et R étant définis comme dans la formule (1) et An représentant le résidu qui fournira l'anion $An^-$ après la quaternisation.

**17.** Utilisation des composés de formule (1) conformes à la revendications 1 comme colorants pour la teinture et l'impression de papier, de cuirs et pour la préparation d'encres.

**18.** Utilisation des colorants azoïques de formule

(2) 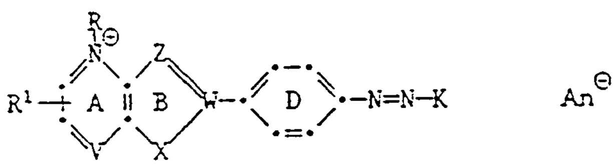

ou leurs formes tautomères, dans laquelle :

- Z signifie N, S ou CH,
- X signifie O, S, $NR^2$ ou N,
- V signifie N ou CH,
- W représente N ou C,
- K représente un copulant,
- R représente un groupe alkyle ou alcényle substitué ou non substitué,
- $R^1$ représente un atome d'hydrogène, un groupe alkyle en $C_{1-6}$, alcoxy en $C_{1-4}$, halogéno, nitro, -CN, $-NHR^2$, -NH-acyle, phénoxy, $COOR^2$, $-CONHR^2$ ou phényle éventuellement substitué, $R^2$ étant un atome d'hydrogène, un alkyle en $C_{1-6}$éventuellement substitué ou un phényle éventuellement substitué,
- D représente un résidu 1,4-phénylène pouvant à son tour être substitué, le noyau A pouvant porter un autre noyau benzénique condensé et
- $An^-$ représente un anion,

pour la teinture et l'impression de papier de toutes sortes.

**19.** Papier teint selon la revendication 18.